# EUROPÄISCHE PATENTSCHRIFT

(11) **EP 1 919 827 B1**
(45) Veröffentlichungstag und Bekanntmachung des Hinweises auf die Patenterteilung: **20.01.2016**
(21) Anmeldenummer: 06775849.0
(22) Anmeldetag: 10.08.2006
(51) Int. Cl.: C01B 31/10, B01J 20/20, B01J 20/28, B01D 53/02, C01B 31/08

(54) **VERFAHREN ZUR HERSTELLUNG VON KUGELAKTIVKOHLE**
METHOD FOR PRODUCING SPHERICAL ACTIVATED CARBON
PROCEDE DE PRODUCTION DE CHARBON ACTIF SPHERIQUE

(30) Priorität: 12.08.2005 DE 102005038555
(43) Veröffentlichungstag der Anmeldung: 14.05.2008
(73) Patentinhaber: Blücher GmbH, 40699 Erkrath (DE)
(72) Erfinder: SCHÖNFELD, Manfred, 06862 Rosslau (DE); SCHÖNFELD, Raik, 30269 Hannover (DE)
(74) Vertreter: Von Rohr Patentanwälte Partnerschaft mbB
(86) Internationale Anmeldenummer: PCT/DE2006/001420
(87) Internationale Veröffentlichungsnummer: WO 2007/019831

(56) Entgegenhaltungen:
- WO-A-2004/046033
- WO-A-2005/016819

## Beschreibung

### Gebiet der Erfindung.

Die Erfindung betrifft ein Verfahren zur Herstellung kugelförmiger Aktivkohle, wobei Polymerkügelchen, welche chemische Gruppen, die thermisch zerfallen, enthalten, karbonisiert werden, eine kugelförmige Aktivkohle erhältlich durch ein solches Verfahren sowie Verwendungen solcher Aktivkohlen. Kugelförmige Aktivkohlen im Sinne der Erfindung sind Aktivkohlepartikel mit im wesentlichen ähnlichen Erstreckungen in allen drei Raumdimensionen, insbesondere mit sphärischer Form.

### Hintergrund der Erfindung und Stand der Technik.

Neben Anwendungen, in welchen klassische Aktivkohlen als Massenprodukt eingesetzt werden, gewinnen Anwendungen zunehmend an Bedeutung, die spezielle Hochleistungsaktivkohlen erfordern. Dies sind zu einen Anwendungen, bei welchen die erforderlichen Menge an Aktivkohle für einen bestimmten Zweck und eine bestimmte Einsatzdauer niedrig zu halten sind und dennoch hervorragende Adsorptionsleistungen (Adsorptionskinetik, Kapazität) verlangt werden. Dies sind insbesondere mobile Anwendungen, wie in Filtern in Fahrzeugen (Kfz, Flugzeuge, etc.) oder in Gasmasken, aber auch in Gebäudeluftfiltern. Neben einem günstigen Leistungsgewicht spielen dabei auch andere Anforderungen eine Rolle, wie beispielsweise geringer Druckabfall über einen die Aktivkohle enthaltenden Filter. Dies bedeutet aber auch, daß es aus insofern zusätzlichen Anforderungen nicht immer möglich ist, hinsichtlich der BET Oberfläche maximierte Aktivkohlen einzusetzen; es kann vielmehr notwendig sein, Aktivkohlen einzusetzen, die trotz moderater BET Oberfläche dennoch überragende Absorptionseigenschaften aufweisen. In jedem Fall sind ausgezeichnete Adsorptionsleistungen verlangt, insbesondere im Falle von Filtern, die vor Giftgasen Personenschutz bieten sollen. Zudem soll eine kugelförmige Aktivkohle besonders abriebfest sein.

Aus der Literaturstelle EP 0 326 271 ist ein Verfahren zur Herstellung einer Aktivkohle bekannt, die durch Karbonisierung eines polysulfonierten Copolymers herstellbar ist. Die erhaltene Aktivkohle besitzt eine multimodale Porengrößenverteilung, i.e. einen hohen Anteil an Meso- und Makroporen.

Aus der Literaturstelle WO 96/21616 ist ein Verfahren zur Herstellung einer Aktivkohle aus monosulfonierten Copolymeren bekannt.

Aus der Literaturstelle WO 99/28234 ist ein Verfahren zur Herstellung einer Aktivkohle aus einem Styrol-Divinylbenzol-Copolymeren bekannt, wobei durch Variation verfahrensmäßiger Parameter die Porengrößenverteilung in weiten Bereichen eingestellt werden kann.

Aus der Literaturstelle US 4,957,897 ist ein Verfahren zur Herstellung von Aktivkohle aus einem polysulfonierten vinylaromatischen Polymer bekannt, wobei die Karbonisierung unter Abspaltung Sulfonsäuregruppen erfolgt.

Die WO 2005/016819 A1 betrifft die Herstellung von Aktivkohle, insbesondere ein Verfahren zur Herstellung kornförmiger, insbesondere kugelförmiger Aktivkohle durch Schwelung von geeigneten kohlenstoffhaltigen Polymeren in Form von Polymerkörnern, insbesondere Polymerkügelchen, welche durch Schwelung zumindest im wesentlichen zu Kohlenstoff umgesetzt werden können, als Ausgangsmaterial, wobei die Polymerkörner, insbesondere Polymerkügelchen, kontinuierlich durch eine mehrere Temperaturzonen und/oder einen Temperaturgradienten umfassende Schwelvorrichtung bewegt werden, so daß eine zumindest im wesentlichen vollständige Umsetzung des Ausgangsmaterials zu Kohlenstoff bewirkt wird.

Aus der Literaturstelle WO 2004/046033 ist eine Kugelaktivkohle bekannt, die eine verbesserte Porengrößenverteilung aufweist.

Das in den vorstehenden Verfahren oft eingesetzte Edukt ist ein frischer oder verbrauchter Ionenaustauscher in Kugelform. Hierbei handelt es sich um (Co)Polymere, welche chemisch aktive Gruppen, beispielsweise Sulfongruppen tragen, und eine poröse Struktur bzw. Gelstruktur aufweisen. Solche Ionenaustauscher sind dem Fachmann aus der Praxis bekannt.

Allen vorstehend beschriebenen bekannten Verfahren zur Herstellung von Aktivkohlen ist der Nachteil gemeinsam, daß die Absorptionseigenschaften sowie die Abriebfestigkeit noch nicht höchsten Anforderungen genügen. Insbesondere die Einzelkornbelastung ist auch verbesserungsbedürftig.

### Technisches Problem der Erfindung.

Der Erfindung liegt das technische Problem zu Grunde, ein Verfahren zur Herstellung einer kugelförmigen Aktivkohle anzugeben, welche hinsichtlich der Einzelkornbelastung, der Absorptionseigenschaften sowie der Abriebfestigkeit verbessert ist.

### Grundzüge der Erfindung und bevorzugte Ausführungsformen.

Zur Lösung der zuvor geschilderten Aufgabenstellung schlägt die vorliegende Erfindung ein Verfahren zur Herstellung kugelförmiger Aktivkohle gemäß Anspruch 1 vor. Weitere vorteilhafte Ausgestaltungen des erfindungsgemäßen Verfahrens sind Gegenstand der diesbezüglichen Unteransprüche.

Zudem schlägt die vorliegende Erfindung zur Lösung der zuvor geschilderten Aufgabenstellung eine nach dem erfindungsgemäßen Verfahren erhältliche Aktivkohle gemäß Anspruch 12 vor.

Weiterhin schlägt die vorliegende Erfindung zur Lösung der zuvor geschilderten Aufgabenstellung eine Verwendung der erfindungsgemäßen Aktivkohle gemäß Anspruch 13 vor.

Zur Lösung dieses technischen Problems lehrt die Erfindung, dass während der Karbonisierung ein Lieferant von freien Radikalen, insbesondere freien Sauerstoffradikalen, den Polymerkügelchen zugegeben wird. Mit anderen Worten ausgedrückt, bei der Karbonisierung werden gleichsam extern erzeugte freie Radikale aktiv zugegeben, i.e. freie Radikale, die auf Grund der aktiven Zugabe zusätzlich zu den im Rahmen der Karbonisierung ohnehin entstehenden freien Radikalen den Reaktionen der Karbonisierung zur Verfügung stehen. Bevorzugt ist, dass der Lieferant von freien Radikalen freie Radikale bildet, die verschieden von freien Radikalen sind, welche durch den Zerfall der chemischen Gruppen entstehen.

Die Erfindung beruht auf der Erkenntnis, dass bei der Karbonisierung Kohlenwasserstoffe mobilisiert werden und nach Diffusion durch das Porensystem dieses verlassen. Hierbei ist aber wesentlich, dass diffundierende Kohlenwasserstoffe nicht in nennenswertem Maße in dem Porenraum kondensieren. Denn durch solche Kondensationsprozesse wird während der Karbonisierung die Porenstruktur, insbesondere die Porengrößenverteilung nachteilig beeinflußt. Aus Gründen der Absorptionsleistung, insbesondere der BET Oberfläche, wünschenswerte Mikroporen (Porendurchmesser 0 bis 4 nm) werden gleichsam verstopft. Zur Verhinderung bzw. Verringerung solcher Kondensationsprozesse werden erfindungsgemäß freie Radikale durch Zugabe eines Lieferanten freier Radikale erzeugt, beispielsweise durch thermische Zersetzung der Lieferanten, die mit den mobilisierten Kohlenwasserstoffen der Gasphase reagieren und diese oxidieren, so dass eine Kondensation nicht mehr stattfinden kann.

Vorzugsweise wird die Karbonisierung in einem Vorkarbonisierungsschritt und einem anschließenden Endkarbonisierungsschritt durchgeführt, wobei der Lieferant von freien Radikalen im Endkarbonisierungsschritt in die Karbonisierungsatmophäre eingebracht wird.

Als Lieferanten von freien Radikalen kommen insbesondere solche in Frage, die bei der (thermischen) Zersetzung bzw. beim Zerfall Sauerstoffradikale bilden. Beispiele sind organische Hydroperoxid-, Persäuren-, Persäurester-, Diaacylperoxid-, Ketonperoxid-, Epidioxid- und Peroxidverbindungen, H₂O₂, Permanganat, ortho-Phosphorsäure, oder P₂O₅. Vorzugsweise wird H₂O₂ eingesetzt. Ein wasserlöslicher Lieferant von freien Radikalen wird vorzugsweise in wäßriger Lösung in die Karbonisierungsatmosphäre eingespritzt. Nicht wasserlösliche flüssige organische Lieferanten können direkt eingespritzt werden.

Bei Einsatz von H₂O₂ ist der Einsatz einer wäßrigen Lösung einer Konzentration von 5 bis 50 Gew.-%, vorzugsweise 5 bis 30 Gew.-%, H₂O₂ bevorzugt. Des Weiteren ist eine Menge an H₂O₂ Lösung von 50 bis 500 g, vorzugsweise 150 bis 300 g, bezogen auf 1 kg eingesetzter Polymerkügelchen, bevorzugt. Bei. Einsatz von ortho-Phosphorsäure ist eine Konzentration der wäßrigen Lösung von 1 bis 20 Gew.-%, insbesondere 1 bis 10 Gew.-%. bevorzugt. Je kg eingesetzter Polymerkügelchen können dann 50 bis 500 g, vorzugsweise 100 bis 250 g, der Lösung eingedüst werden.

Im Rahmen des erfindungsgemäßen Verfahrens können die eingesetzten Polymerkügelchen beispielsweise aus einem Polystyrol(co)polymer, Polyacryl(co)polymer, Polyalkylamin(co)polymer oder Phenol-Formaldehydharz, vorzugsweise aus einem sulfonierten Copolymer von Styrol mit Divinylbenzol oder mit Acrylsäure, hergestellt, insbesondere ein Ionenaustauscher des Geltyps oder ein makroporöser Ionenaustauscher sein. Es kann sich auch um verbrauchte Ionenaustauscher handeln, unverbrauchte Ionenaustauscher sind jedoch bevorzugt. Ionenaustauscher des Geltyps enthalten typischerwiese ca. 2 bis 10%, insbesondere 4 bis 9%, Divinylbenzol Monomere (Gewichtsanteile Monomer zur Gesamtmenge Monomere). Die thermisch zerfallenden chemischen Gruppen der eingesetzten Polymerkügelchen sind dann typischerweise Sulfonsäuregruppen, sogenannte Homologe, wie Kohlenwasserstoffradikale und -verbindungen, und aromatische Kohlenwasserstoffradikale und -verbindungen. Handelsübliche Ionaustauscherkügelchen haben typischerweise einen Durchmesser von 0,2 bis 2 mm, insbesondere von 0,4 bis 1 mm, und führen zu kugelförmigen Aktivkohlen mit einem Durchmesser im Bereich von 0,1 bis 1,8 mm Durchmesser, insbesondere 0,3 bis 0,8 mm Durchmesser.

Im Einzelnen kann das erfindungsgemäße Verfahren wie folgt durchgeführt werden.

Die. Polymerkügelchen können vor der Karbonisierung mit SO₃ Gas behandelt werden, vorzugsweise bei Temperaturen zwischen 273 K und 573 K, insbesondere zwischen 293 K und 443 K, und im Druckwechsel zwischen -1 bar und 10 bar, insbesondere zwischen -1 bar und 5 bar, bezogen auf deh Atmosphärendruck. Hierdurch wird eine vollständige Resttrocknung des Polymers vor der weiteren Anlagerung von Sulfongruppen erreicht. Weiterhin werden die vorhandenen Sulfongruppen dehydriert. Schließlich erfolgt eine weitere Anlagerung von Sulfongruppen bis zu einer teilweisen Polysulfonierung.

Anschließend an die Behandlung mit SO₃ Gas und vor der Karbonisierung können die Polymerkügelchen mit konzentrierter Schwefelsäure oder Oleum behandelt werden, vorzugsweise in einem Massenverhältnis von 1 Gewichtsteil Säure auf 0,5 bis 10 Gewichtsteile, insbesondere auf 1 bis 3 Gewichtsteile, Polymerkügelchen und im Temperaturbereich von 273 K bis 573 K, insbesondere von 400 K bis 550 K. Die konzentrierte Schwefelsäure kann eine Konzentration (Mol SO₃ / Mol H₂O) von 60% bis 100%, insbesondere 80% bis 98%, aufweisen. Im Falle des Oleums kann der Anteil an freiem SO₃ (bezogen auf Mole 100%iger Schwefelsäure) im Bereich von 1 % bis 35%, insbesondere 1% bis 25%, liegen. In dieser Verfahrensstufe wird eine Peptisation erreicht, i.e. Monomer-, Dimer- und Oligomerreste werden.herausgelöst und anschließend auf der Oberfläche der Partikel angelagert. Diese Anlagerungen bilden im Zuge der anschließenden Karbonisierung eine sehr harte und folglich abriebfeste Pseodographitschicht auf der Oberfläche der Partikel.

Der Vorkarbonisierungsschritt kann in einem Temperaturbereich von zumindest 373 K als Anfangstemperatur bis maximal 673 K als Endtemperatur, innerhalb des Temperaturbereiches mit einem Aufheizgradienten von 0,5 K/min bis 5 K/min, insbesondere 1 K/min bis 3 K/min, und in einer inerten oder oxidierenden Atmosphäre durchgeführt werden. Die Anfangstemperatur kann im Bereich von 373K bis 523K, insbesondere 453K bis 523 K, liegen. Die Endtemperatur kann im Bereich von 533 K bis 673 K liegen. Das Temperaturprogramm dieses Verfahrensschrittes ist gegeben durch die Anfangstemperatur, den hieran anschließenden Aufheizprozess mit dem angegebenen Aufheizgradienten und die erreichte Endtemperatur. Als Inertgase kommen beispielsweise Stickstoff oder Argon in Frage. Eine oxidierende Atmosphäre kann beispielsweise durch Zusatz von Sauerstoff oder Luft zum Inertgas erzeugt werden. Dabei kann der Anteil Sauerstoff (bezogen auf das Volumen) im Inertgas 1% bis 10%, insbesondere bis 5%, betragen, wobei die Angabe Sauerstoff aus Peroxidzerfall nicht umfasst.

Der Endkarbonisierungsschritt kann in einem Temperaturbereich von zumindest der Endtemperatur der Vorkarbonisierung bis maximal 1073K bis 1273 K und innerhalb des Temperaturbereiches mit einem Aufheizgradienten von 2 K/min bis 40 K/min, insbesondere 10 K/min bis 25 K/min, durchgeführt werden.

Anschließend an die Endkarbonisierung kann ein Aktivierungsverfahrensschritt durchgeführt werden. Dieser kann entsprechend dem Stand der Technik ausgeführt sein, wobei die Parameter im Einzelnen nach Maßgabe der gewünschten Porenstruktur zu wählen sind. Typischerweise erfolgt die Aktivierung bei Temperaturen von 900 K bis 1200 K unter Zugabe von 1 bis 30% (bezogen auf den Anteil Mole) Wasserdampf und/oder CO₂ zum Inertgas bzw. Spülgas. Im Falle des CO₂ ist eine Obergrenze von 10% bevorzugt.

Eine erfindungsgemäße Kugelaktivkohle ist beispielsweise in Mitteln zur Filterung von Gasen, insbesondere Luftfiltern und Gasmasken bzw. Gasschutzanzügen, einsetzbar. Weitere Einsatzgebiete sind: Gastrennung, Gasspeicherung, Latentwärmetauscher, Filtereinrichtungen in Klimaanlagen, insbesondere auch im Ansaugbereich zur Adsorption ungewollt im Ansaugbereich freigesetzter toxischer Gase, Träger für pharmazeutische Wirkstoffe, und Katalyse, beispielsweise mittels mit einer katalytisch aktiven Substanz beschichteter Aktivkohlen. Im Rahmen dieser Verwendungen sind die Aktivkohlepartikel auf ein Trägermaterial aufgebracht und fixiert und/oder darin eingebettet. Das Trägermaterial wird dann einem zu reinigenden Gasstrom ausgesetzt. Im Falle der Träger für pharmazeutischen Wirkstoffe werden die Aktivkohlepartikel mit dem Wirkstoff beladen und dann galenisch in üblicher Weise hergerichtet.

Im Folgenden wird die Erfindung anhand von lediglich Ausführungsformen darstellenden Beispielen näher erläutert.

### Beispiel 1: Herstellung einer Kugelaktivkohle unter Einsatz von H₂O₂.

Eingesetzt wird ein stark saurer, gelförmiger Kationenaustauscher aus sulfoniertem Styrol-Divinylbenzol Copolymerisat in der H-Form, wobei die Matrix mit ca. 10% Divinylbenzol-Anteil vernetzt ist, in Kugelform und einer Partikelgröße (Durchmesser) von 1 mm. Dieses handelsübliche Produkt (C100x10H, Purolite) wird zunächst dreimal mit entionisiertem Wasser gewaschen (30 min., 40 °C). Nach dem Waschen erfolgt eine Zentrifugation unter Vakuum (8000 g, 10 min., 10 mBar) auf eine Restfeuchte von weniger als 5 Gew.-%, vorzugsweise weniger als 2,5 Gew.-%, Wasser.

Hieran schließt sich eine Behandlung des Polymers in einem diskontinuierlichen Reaktor mit SO₃-Gas an. Es erfolgen 25 Druckwechsel zwischen -1 bar und 5 bar. Dabei erhitzen sich die Polymerkügelchen auf eine Temperatur im Bereich von 293 K bis 443 K aufgrund der exothermen Reaktion des Restwassers mit SO₃.

Sodann erfolgt in einem diskontinuierlichen Reaktor eine Behandlung der Polymerkügelchen mit Oleum (3% freies SO₃) in einem Massenverhältnis von 1 : 1,75 (Säure zu Polymerkügelchen). Dabei wird eine Temperatur der Polymerkügelchen von ca. 493 K eingestellt. In dieser Verfahrensstufe erfolgt keine zusätzlich Sulfonierung des Polymers. Es handelt sich um eine reine Leaching Verfahrensstufe, in welcher Kohlenwasserstoff Monomere, Dimere und Oligomere mobilisiert und auf den Oberflächen der Kügelchen abgelagert werden.

Dann erfolgt die Vorkarbonisierung in dem gleichen Reaktor und in einer Argonatmosphäre, welcher 3 Vol.-% Sauerstoff (technische Reinheit) zugesetzt ist. Beginnend bei 493 K wird mit einem Aufheizgradienten von 2 K/min auf eine Temperatur von 573 K hochgefahren. Hierbei wird nahezu aller Schwefel aus den Kügelchen abgespalten und ausgetrieben.

Es schließt sich im gleichen Reaktor dann die Endkarbonisierung an. Hierbei wird praktisch kein Schwefel mehr freigesetzt, so dass auf eine Schwefel-Abgasreinigung in dieser Verfahrensstufe verzichtet werden kann. Beginnend bei 573 K wird mit einem Aufheizgradienten von 12 K/min bis auf eine Temperatur von 1193 K hochgefahren. Dabei werden alle ca. 3 min. eine wäßrige 10 %-ige H₂O₂ Lösung in den Gasraum direkt aus einer gekühlten Zuführleitung eingedüst. Insgesamt werden je kg Polymerkügelchen 200 g Lösung eingedüst, wobei sich die Eindüsung der Gesamtmenge nahezu gleichförmig über den Aufheizzeitraum erstreckt. Hieran schließt sich eine Aktivierung bei 1193 K in einer Inertgasatmosphäre an. Dabei werden die pyrolysierten Kugeln in einer Aktivierungsgasatmosphäre (Ar 65 Vol.-%, CO₂ 7 Vol.-%, H₂O 28 Vol.-%) für 240 min. auf besagter Temperatur gehalten.

Die erhaltenen Kugelaktivkohlepartikel weisen einen Durchmesser von ca. 0,55 mm auf. Man erhält eine Kugelaktivkohle mit hohem Mikroporenanteil und vergleichsweise sehr geringem Meso- und Makroporenanteil sowie mit einer sehr hohen fraktalen Dimension.

Als BET-Oberfläche ergibt sich ein Wert von ca. 1400 m²/g. Für die Porengrößenverteilung ergeben sich die folgenden Wert: 1,2 - 1,7 nm: ca. 35%, 1,7 - 2,1: ca. 38%, 2,1 - 2,5: ca. 13%, 2,5 - 2,9: ca. 4%, 2,9 - 3,3: ca. 3% (Rest außerhalb der genannten Durchmesserbereiche). Die Poren < 4 nm bilden ca. 97 % des gesamten (offenen) Porenvolumens. Als Wert für die fraktale Dimension wurde D = 2,946 erhalten. Bezüglich der verwendeten Meßmethoden für die vorstehend genannten Werte wird ausdrücklich auf die Literaturstelle WO 2004/046033 A1 Bezug genommen.

Die Abriebfestigkeit ergibt sich zu 100%, gemessen nach der Ballpan Methode (siehe ASTM D3802).

Die.Einzelkornbelastung bzw. der Berstdruck beträgt im Mittel ca. 2000 g/Korn und erreicht in den Spitzenwerten bis zu 3000 g/Korn. Die Messung des Berstdruckes wurde wie folgt durchgeführt. Ein Probenkorn wurde auf die Platte einer Messvorrichtung gelegt, welche die waagerecht angeordnete Platte und einen vertikal verschieblich gelagerten Druckstempel umfasst. Der Druckstempel wurde vorsichtig auf das Probenkorn abgelassen und in einen auf seinem oberen Ende angeordneten Wasserbehälter wurde langsam und vorsichtig solange Wasser eingefüllt, bis das Korn zerborsten ist. Dann wurden der Druckstempel mit gefülltem Wasserbehälter gewogen; dies war dann der erhaltene Wert. Es wurden stets zumindest 20 Probenkörner gemessen und aus den erhaltenen Werten der arithmetische Mittelwert errechnet.

### Beispiel 2: Herstellung einer Kugelaktivkohle unter Einsatz anderer Lieferanten freier Radikale

Es wird entsprechend dem Beispiel 1 verfahren, wobei jedoch bei der Endkarbonisierung an Stelle der H₂O₂ Lösung ortho-Phosphorsäure als Lieferant freier Sauerstoffradikale eingesetzt werden. Die Konzentration ist 5 Gew-%. Die eingedüste Menge beträgt 200g je kg eingesetzter Polymerkügelchen.

Das erhaltene Produkt ist praktisch identisch mit dem gemäß Beispiel 1 erhaltenen Produkt.

## Patentansprüche

1. Verfahren zur Herstellung kugelförmiger Aktivkohle, wobei Polymerkügelchen, welche chemische Gruppen, die thermisch zerfallen, enthalten, karbonisiert werden,
**dadurch gekennzeichnet,**
**daß** während der Karbonisierung ein Lieferant von freien Radikalen den Polymerkügelchen zugegeben wird, wobei der Lieferant von freien Radikalen ausgewählt ist aus der Gruppe bestehend aus organischen Hydroperoxid-, Persäuren-, Persäureester-, Ketonperoxid-, Diacylperoxid-, Epidioxid- und Peroxidverbindungen, H₂O₂, Permanganat, ortho-Phosphorsäure und P₂O₅.

2. Verfahren nach Anspruch 1, **dadurch gekennzeichnet, daß** die eingesetzten Polymerkügelchen aus einem Polystyrol(co)polymer, Polyacryl(co)polymer, Polyalkylamin(co)polymer oder Phenol-Formaldehydharz, vorzugsweise aus einem sulfonierten Copolymer von Styrol mit Divinylbenzol oder mit Acrylsäure, hergestellt sind, insbesondere Ionenaustauscher des Geltyps sind.

3. Verfahren nach Anspruch 1 oder 2, **dadurch gekennzeichnet, daß** die thermisch zerfallenden chemischen Gruppen der eingesetzten Polymerkügelchen Sulfonsäuregruppen sind.

4. Verfahren nach einem der Ansprüche 1 bis 3, **dadurch gekennzeichnet, daß** die Polymerkügelchen vor der Karbonisierung mit SO₃ Gas behandelt werden, vorzugsweise bei Temperaturen zwischen 273 K und 573 K und im Druckwechsel zwischen -1 bar und 10 bar, bezogen auf den Atmosphärendruck.

5. Verfahren nach einem der Ansprüche 1 bis 4, **dadurch gekennzeichnet, daß** die Polymerkügelchen vor der Karbonisierung mit konzentrierter Schwefelsäure oder Oleum behandelt werden, vorzugsweise in einem Massenverhältnis von 1 Gewichtsteil Säure auf 0,5 bis 10 Gewichtsteile Polymerkügelchen und im Temperaturbereich von 273 K bis 573 K.

6. Verfahren nach einem der Ansprüche 1 bis 5, **dadurch gekennzeichnet, daß** die Karbonisierung in einem Vorkarbonisierungsschritt und einem anschließenden Endkarbonisierungsschritt durchgeführt wird, wobei der Lieferant von freien Radikalen im Endkarbonisierungsschritt in die Karbonisierungsatmosphäre eingebracht wird.

7. Verfahren nach einem der Ansprüche 1 bis 6, **dadurch gekennzeichnet, daß** der Lieferant von freien Radikalen H₂O₂ ist.

8. Verfahren nach einem der Ansprüche 1 bis 7, **dadurch gekennzeichnet, daß** ein wasserlöslicher Lieferant von freien Radikalen in wäßriger Lösung in die Karbonisierungsatmosphäre eingespritzt wird.

9. Verfahren nach einem der Ansprüche 6 bis 8, **dadurch gekennzeichnet, daß** der Vorkarbonisierungsschritt in einem Temperaturbereich von zumindest 373 K als Anfangstemperatur bis maximal 673 K als Endtemperatur innerhalb des Temperaturbereiches mit einem Aufheizgradienten von 0,5 K/min bis 5 K/min und in einer inerten oder oxidierenden Atmosphäre durchgeführt wird.

10. Verfahren nach einem der Ansprüche 6 bis 9, **dadurch gekennzeichnet, daß** der Endkarbonisierungsschritt in einem Temperaturbereich von zumindest der Endtemperatur der Vorkarbonisierung bis maximal 1273 K und innerhalb des Temperaturbereiches mit einem Aufheizgradienten von 2 K/min bis 20 K/min durchgeführt wird.

11. Verfahren nach einem der Ansprüche 1 bis 10, **dadurch gekennzeichnet, daß** anschließend an die Endkarbonisierung ein Aktivierungsverfahrensschritt durchgeführt wird.

12. Kugelförmige Aktivkohle erhältlich mittels eines Verfahrens nach einem der Ansprüche 1 bis 11, wobei die fraktale Dimension vorzugsweise größer als 2,900, insbesondere größer als 2,940 oder 2,943 ist.

13. Verwendung einer kugelförmigen Aktivkohle gemäß Anspruch 12 zur Entfernung von Schadstoffen aus Luft.

## Claims

1. A method for the production of spherical activated carbon, wherein polymer beads containing chemical groups, which decompose thermally, are carbonized,
**characterized in that**
during carbonization a supplier of free radicals is added to the polymer beads, wherein the supplier of free radicals is selected from the group consisting of organic hydroperoxides, peracids, peracid esters, ketone peroxides, diacyl peroxides, epidioxides, and peroxides compounds, H₂O₂, permanganate, ortho-phosphoric acid and P₂O₅.

2. The method according to claim 1, **characterized in that** the polymer beads utilized are produced from a polystyrene (co)polymer, polyacrylic (co)polymer, polyalkyl amine (co)polymer, or phenol formaldehyde resin, preferably from a sulfonated copolymer of styrene with divinylbenzene, or with acrylic acid, and are, in particular, ion exchangers of the gel type.

3. The method according to claims 1 or 2, **characterized in that** the thermally decomposing chemical groups of the polymer beads utilized are sulfonic acid groups.

4. The method according to one of the claims 1 through 3, **characterized in that** the polymer beads are treated with SO₃ gas before carbonation, preferably at temperatures between 273 K and 573 K, and at a pressure exchange of between -1 bar and 10 bars, based on the atmospheric pressure.

5. The method according to one of the claims 1 through 4, **characterized in that** the polymer beads are treated with concentrated sulfuric acid or oleum before carbonation, preferably at a mass ratio of 1 part by weight of acid to 0.5 to 10 parts by weight of polymer beads, and at the temperature range of 273 K to 573 K.

6. The method according to one of the claims 1 through 5, **characterized in that** the carbonation is carried out in a pre-carbonation step, and a subsequent final carbonation step, wherein the supplier of free radicals is introduced into the carbonation atmosphere during the final carbonation step.

7. The method according to one of the claims 1 through 6, **characterized in that** the supplier of free radicals is H₂O₂.

8. The method according to one of the claims 1 through 7, **characterized in that** a water-soluble supplier of free radicals in aqueous solution is injected into the carbonation atmosphere.

9. The method according to one of the claims 6 through 8, **characterized in that** the pre-carbonation step is carried out at a temperature range of at least 373 K, as the initial temperature, up to a maximum of 673 K, as the final temperature, within the temperature range with a heating gradient of 0.5 K/min to 5 K/min, and at an inert or oxidizing atmosphere.

10. The method according to one of the claims 6 to 9, **characterized in that** the final carbonation step is carried out at a temperature range of at least the final temperature of the pre-carbonation up to a maximum of 1273 K, and within the temperature range with a heating gradient of 2 K/min to 20 K/min.

11. The method according to one of the claims 1 to 10, **characterized in that** an activation process step is carried out subsequent to the final carbonation.

12. A spherical activated carbon, obtainable by means of a method according to one of the claims 1 through 11, wherein the fractal dimension is preferably greater than 2.900, in particular greater than 2.940, or 2.943.

13. A use of the spherical activated carbon according to claim 12 for removing pollutants from air.

## Revendications

1. Procédé de fabrication de charbon actif sphérique, dans lequel des perles polymères contenant des groupes chimiques qui se décomposent par voie thermique sont carbonisées,
**caractérisé en ce que**,
pendant la carbonisation, un générateur de radicaux libres est ajouté aux perles polymères, le générateur de radicaux libres étant choisi dans le groupe consistant en les composés organiques hydroperoxydes, peracides, esters de peracides, peroxydes de cétone, peroxydes de diacyle, épidioxydes et peroxydes, H₂O₂, un permanganate, l'acide orthophosphorique et P₂O₅.

2. Procédé selon la revendication 1, **caractérisé en ce que** les perles polymères utilisées sont fabriquées à partir d'un (co)polymère de polystyrène, d'un (co)polymère polyacrylique, d'un (co)polymère de polyalkylamine ou d'une résine de phénol-formaldéhyde, de préférence à partir d'un copolymère sulfoné de styrène avec du divinylbenzène ou de l'acide acrylique, en particulier sont des échangeurs d'ions de type gel.

3. Procédé selon la revendication 1 ou 2, **caractérisé en ce que** les groupes chimiques qui se décomposent par voient thermique des perles polymères utilisées sont des groupes acide sulfonique.

4. Procédé selon l'une des revendications 1 à 3, **caractérisé en ce que** les perles polymères sont, avant la carbonisation, traitées avec du SO₃ gazeux, de préférence à une température comprise entre 273 K et 573 K en présence d'une modulation en pression comprise entre -1 bar et 10 bar par rapport à la pression atmosphérique.

5. Procédé selon l'une des revendications 1 à 4, **caractérisé en ce que** les perles polymères sont, avant la carbonisation, traitées avec de l'acide sulfurique concentré ou de l'oléum, de préférence selon un rapport en masse de 1 partie en poids d'acide pour 0,5 à 10 parties en poids de perles polymères et dans une plage de températures de 273 K à 573 K.

6. Procédé selon l'une des revendications 1 à 5, **caractérisé en ce que** la carbonisation est mise en oeuvre dans une étape de pré-carbonisation et dans une étape ultérieure de carbonisation finale, le générateur de radicaux libres, dans l'étape de carbonisation finale, étant introduit dans l'atmosphère de carbonisation.

7. Procédé selon l'une des revendications 1 à 6, **caractérisé en ce que** le générateur de radicaux libres est H₂O₂.

8. Procédé selon l'une des revendications 1 à 7, **caractérisé en ce qu'**un générateur de radicaux libres soluble dans l'eau est, en solution aqueuse, injecté dans l'atmosphère de carbonisation.

9. Procédé selon l'une des revendications 6 à 8, **caractérisé en ce que** l'étape de pré-carbonisation est mise en oeuvre dans une plage de températures allant d'au moins 373 K en tant que température de départ à un maximum de 673 K en tant que température finale, dans la plage de températures, avec une vitesse de montée en température de 0,5 K/min à 5 K/min et dans une atmosphère inerte ou oxydante.

10. Procédé selon l'une des revendications 6 à 9, **caractérisé en ce que** l'étape de carbonisation finale est mise en oeuvre dans une plage de températures allant d'au moins la température finale de la pré-carbonisation à un maximum de 1273 K, et à l'intérieur de la plage de températures, avec une vitesse de montée en température de 2 K/min à 20 K/min.

11. Procédé selon l'une des revendications 1 à 10, **caractérisé en ce que** la carbonisation finale est suivie d'une étape d'un procédé d'activation.

12. Charbon actif sphérique pouvant être obtenu par un procédé selon l'une des revendications 1 à 11, dont la dimension fractale est de préférence supérieure à 2,900, en particulier supérieure à 2,940 ou 2,943.

13. Utilisation d'un charbon actif sphérique selon la revendication 12 pour éliminer des polluants de l'air.
